# EUROPÄISCHE PATENTANMELDUNG

(11) **EP 1 959 102 A2**
(43) Veröffentlichungstag der Anmeldung: **20.08.2008**
(21) Anmeldenummer: 08101030.8
(22) Anmeldetag: 29.01.2008
(51) Int. Cl.: F01D 15/10, F02C 7/36

(54) **Gasturbine mit Turbogenerator**

(30) Priorität: 14.02.2007 DE 102007011922; 24.03.2007 DE 102007014203
(71) Anmelder: Alstom Technology Ltd, 5400 Baden (CH)
(72) Erfinder: Cerny, Jan, Dr., 5615 Fahrwangen (CH)

(57) **Zusammenfassung**

Eine Gasturbine (8) mit Turbogenerator (9), insbesondere für Kraftwerksanlagen zeichnet sich dadurch aus, dass der Turbogenerator (9) als vierpoliger Synchrongenerator ausgebildet ist, die Gasturbine (8) mit einer Drehzahl von 1500 min⁻¹ oder 1800 min⁻¹ betrieben wird und zwischen der Gasturbine (8) und dem Generator (9) eine direkte mechanische Kupplung (12) vorgesehen ist. Um dem Leistungsbedarf des Generators gerecht zu werden wird die Gasturbine dreidimensional im Bezug auf konventionelle Gasturbinen skaliert. Auf diese Weise kann mit einer skalierten Gasturbine und einem vierpoligen Generator die Leistung von vier bisher verwendeten Gasturbinen mit vier zweipoligen Generatoren erzielt werden und somit kostengünstiger und platzsparend Strom erzeugt werden. Die mechanischen Belastungen innerhalb der Turbine bleiben dabei unverändert.

## Beschreibung

### Technisches Gebiet

Die Erfindung bezieht sich auf eine Gasturbine mit Turbogenerator, insbesondere für eine Kraftwerksanlage.

### Stand der Technik

In Kraftwerksanlagen werden zur Stromerzeugung i.d.R. Generatoren verwendet. Um den gewonnenen Wechselstrom in das elektrische Energieversorgungsnetz einspeisen zu können, müssen die Generatoren in Europa mit 50 Hz, in den USA mit 60 Hz betrieben werden. Die häufigste Bauform der dafür verwendeten Wechselstromgeneratoren sind die Drehstrom-Synchron-Generatoren, zu denen die Wasserkraft-, Diesel- und Turbogeneratoren gehören. Die Polzahl des Generators bestimmt die Generatordrehzahl. Je niedriger die Drehzahl des Turbogenerators, desto höher ist die benötigte Polzahl.

Turbogeneratoren werden von Dampfturbinen oder Gasturbinen angetrieben. Üblicherweise sind Turbogeneratoren zweipolig ausgeführt und werden mit 3000 min⁻¹ (50 Hz, Europa) oder mit 3600 min⁻¹ (60 Hz, USA) betrieben. Bei Dampfturbinen liegen die Leistungsgrenzen für 3000 min⁻¹ bzw. 3600 min⁻¹ dabei etwa in dem Bereich bis 1200 MW, für 1500 min⁻¹ bzw. liegen im Spezialfall von Dampfturbinen in großen Nuklearkraftwerken die Leistungsgrenzen bei bis 1800 MW mit 4-poligen Turbogeneratoren. Gasturbinen werden heutzutage mit zweipoligen Generatoren verwendet und leisten bei 3000 min⁻¹ bzw. 3600 min⁻¹ etwa bis zu 350 MW. Da Gasturbinen einen besseren Wirkungsgrad als Dampfturbinen haben und gasförmige oder flüssige Brennstoffe direkt zum Antrieb der Turbine verwerten können, ohne vorher Dampf erzeugen zu müssen, ist das Einsatzgebiet vielfältiger und die Effizienz größer.

Gasturbinen als Antrieb der Turbogeneratoren finden ihre Anwendung bisher hauptsächlich als Reservekraftwerke, zur Spitzenlastdeckung und als fahrbare Notstromaggregate. Bei Gasturbinen ist die erreichbare Leistung bei festgelegter Drehzahl durch die Größe der Rotorabmessung und der damit verbundenen mechanischen Belastung (Fliehkraft) begrenzt. Bei einem Einsatz mit 3000 min⁻¹ bzw. 3600 min⁻¹ ist in der Gasturbinentechnologie unter Verwendung hochbelastbarer Materialien, z.B. gegossene Turbinenschaufeln aus Einkristallen, eine Grenze der mechanischen Belastung erreicht. Daher kommen zur Deckung des Leistungsbedarfs in großen Gasturbinen in Kraftwerken bisher mehrere Turbogruppen mit zweipoligen Generatoren zur Anwendung.

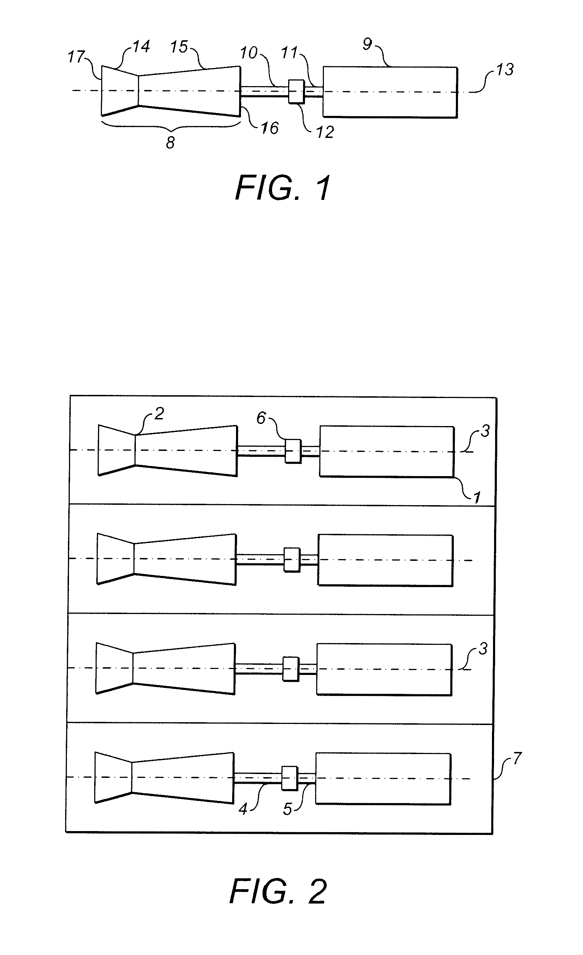

In Figur 2 ist schematisch eine Anordnung bisher verwendeter zweipoliger Generatoren 1 und Gasturbinen 2 abgebildet. Die Gasturbinen 2 und Generatoren 1 sind jeweils so angeordnet, dass die Längsachse 3 der Turbine 2 und des Generators 1 auf einer Linie liegen. Die Generatoren 1 sind in der Anordnung vornehmlich als Turbogeneratoren ausgeführt. Zwischen dem Antrieb, der Gasturbine 2, und dem Stromerzeuger, dem Generator 1, ist ein Verbindungsstück in Form von Wellen und einer Kupplung 6 zusammengestellt. Die Turbine 2 gibt das von ihr erzeugte Drehmoment über eine Welle 4 ab. Der Antrieb des Turbogenerators ist ebenfalls in Form einer Welle 5 vorhanden und über eine Kupplung 6 an die Antriebswelle 4 der Turbine verbunden. Beide Wellen 4, 5 laufen entlang derselben Achse 3. Durch das parallele Anordnen mehrerer Turbinen-Generatoren-Baugruppen wird ein Gesamtkraftwerk 7 mit einer Leistung entsprechend der Summe der Einzelleistungen der Turbogeneratoren 1 gestaltet.

Gas- und Dampfturbinenanlagen sind aus dem Stand der Technik bekannt. In der DE 198 43 441 A1 ist eine Kombinationskraftwerkanlage mit mehreren Gasturbinen in und einer Dampfturbine offenbart. Jeweils zwei Gasturbinen betreiben dabei mit einer Antriebswelle jeweils einen Generator, die Dampfturbine treibt mit einer eigenen Welle einen eigenen Generator an, so dass insgesamt drei Generatoren betrieben werden. Diese Anordnung der Turbinen ist schaltungsmäßig parallel. Die Generatoren der Gasturbinen sind zwischen den in Reihe angeordneten Turbinen positioniert. Der durch die Generatoren erzeugte elektrische Strom wird über Generatorableitungen dem Stromnetz zugeführt.

In der DE 198 50 052 A1 ist ein Generator mit einem Doppelantrieb einer Gasturbine und einer Dampfturbine offenbart. Die Gasturbine ist unmittelbar über eine Gasturbinenwelle und eine Kupplung an die Welle des Generators gekoppelt. Die Dampfturbine besitzt eine eigene Antriebswelle, die über ein Getriebe an die Antriebswelle des Generators gekoppelt ist. Das Getriebe fungiert dabei als Frequenzwandler oder Wandler von einer übersynchronen auf eine synchrone Drehzahl. Die Kupplung entspricht einer Synchronkupplung mit der während der Anlaufphase des Generators die Dampfturbine entkoppelbar ist. Bei zweipoligen Generatoren bildet die erregerseitige Welle wegen der Schleifringe oder der rotierenden Erregung einen Engpass für die Leistungsübertragung und limitiert die Totalleistung einer CC-Einheit

Im genannten Stand der Technik werden Generatoren in Gasturbinenkraftwerken entweder mit mehreren Gasturbinen oder einer Gas- und einer Dampfturbine angetrieben. Nachteilhafterweise werden dabei eventuelle vierpolige Generatoren ebenfalls mit mehreren Turbinen angetrieben und somit hohe Herstellungs- und Betriebskosten verursacht. Ebenfalls nachteilhaft ist die Verwendung eines Getriebes, durch das neben den Verlustleistungen der Turbinen zusätzliche Verluste durch Reibung auftreten.

### Darstellung der Erfindung

Es ist daher die Aufgabe der Erfindung, eine leistungsgesteigerte Gasturbine mit Turbogenerator zur Verfügung zu stellen. Dabei sollte möglichst die Aufstellfläche konventioneller parallel angeordneter Gas-Turbogeneratoren nicht überschritten werden.

Diese Aufgabe wird durch eine Gasturbine mit Turbogenerator mit den Merkmalen des Patentanspruchs 1 gelöst. Vorteilhafte Ausführungsformen und Weiterbildungen sind in den Unteransprüchen beschrieben.

Erfindungsgemäß wird dies bei einer Anordnung einer Gasturbine mit Turbogenerator, insbesondere für eine Kraftwerksanlage dadurch erreicht, dass der Turbogenerator als vierpoliger Synchrongenerator ausgebildet und direkt auf das Netz verbunden ist, dass die Gasturbine in ihren Auslegungspunkt mit einer Drehzahl von 1500 min⁻¹ oder 1800 min⁻¹ betrieben wird und dass zwischen der Gasturbine und dem Generator eine direkte mechanische Kupplung vorgesehen ist. Durch die vierpolige Ausbildung kann die Leistung des Turbogenerators und damit der Kraftwerksanlage gesteigert werden. Durch Verwendung einer Gasturbine anstatt einer Dampfturbine kann der Vorteil des höheren Wirkungsgrades genutzt werden. Die Gesamtleistung entspricht dabei der einer aus dem Stand der Technik bekannten Kraftwerksanlage mit vier parallel betriebenen zweipoligen Generatoren. Durch die Reduzierung der Anzahl der Generatoren, und damit entsprechend der Turbinen, reduzieren sich die spezifischen Kosten pro erzeugtem Kilowatt. Dies begründet sich in geringerem Brennstoffverbrauch, einer geringeren Teilezahl pro Kraftwerk, einer geringeren Anzahl benötigter Steuerungs- und Messungssysteme und geringeren Unterhaltungs- und Wartungskosten. Vorteilhafterweise ist der erzeugte Strom für nationale Energieversorgungsnetze, sowohl in Europa, als auch in den USA geeignet. Außerdem sind derartige halbtourige Gasturbinen und Generatoren sehr laufruhig aufgrund geringer Vibrationen. Ferner macht die größere polare Trägheit pro Leistung derartige Gasturbinen und Generatoren stabiler in Bezug auf Lastsprünge.

Des Weiteren ist es vorteilhaft, dass die Gasturbine bei optimalem Wirkungsgrad betrieben wird. Durch die Verwendung eines vierpoligen Generators ist das von der Turbine zu leistende Drehmoment und damit der Leistungsbedarf an die Gasturbine deutlich erhöht. Die Generatordrehzahl ist durch das jeweilige Stromnetz auf eine Drehzahl von 1500 min⁻¹ oder 1800 min⁻¹ festgelegt. Um den Leistungsanforderungen gerecht zu werden, wird die Gasturbine gegenüber konventionellen Gasturbinen für zweipolige Generatoren in ihrer Größe angepasst, d.h. dreidimensional skaliert, und erzielt somit Leistungsabgaben, die vier Mal größer sind als bei konventionellen Anlagen.

Vorteilhafterweise werden dazu alle Abmaße der bisher für zweipolige Generatoren verwendeten Gasturbine mit dem Faktor 2 skaliert. Das führt dazu, dass sich auch das spezifische Gewicht der Teile der Gasturbine verdoppelt (in kg/KW) und die auf das Gewicht bezogenen Kosten steigen. Durch die Reduzierung der Teilezahl auf ein Viertel ist insgesamt jedoch eine Reduzierung der spezifischen Anlagekosten (€/KW) erreichbar.

Durch die um den Faktor 2 größere Dimensionierung der Gasturbine vergrößert sich deren Leistungsabgabe und der erzeugte Massenfluss um das Vierfache. Auf diese Weise kann der Platzbedarf bei gleicher abgegebenen Leistung geringer oder gleich werden.

Bei der Skalierung der Turbinenteile ist es vorteilhaft, dass während des Betriebs die Machzahl und die Geschwindigkeitsdreiecke in den Strömungskanälen des Verdichters und der Turbine unverändert bleiben, so dass sich die Belastungen der Bauteile nicht erhöht.

Durch die Skalierung der Abmaße der Gasturbine mit dem Multiplikationsfaktor "2" steigt die charakteristische Länge L bei der Berechnung der Strömungsgrößen ebenfalls um den Faktor "2" an. Aus diesem Grund verdoppeln sich die Größen der Reynoldszahl (Re = υ L / v) und der Nusseltzahl (Nu = α L / λ_{L}).

Des Weiteren ist es von Vorteil, dass trotz erheblicher Leistungssteigerung die Drücke und Temperaturen in den Laufschaufelkanälen und die Spannungen innerhalb der Gasturbine, vor allem an den Laufschaufeln unverändert bleiben. Daraus resultiert eine unveränderte Belastung der Bauteile und eine Lebensdauer der Gasturbine, die herkömmlicher Gasturbinen entspricht.

Das Verhältnis zwischen der kritischen Drehzahl des Rotors und der Betriebsdrehzahl bleibt trotz der Skalierung der Gasturbine vorteilhafterweise konstant, so dass die Sicherheit beim Betreiben der Gasturbine und die Sicherheit der Bauteile nicht zu versagen unverändert hoch bleibt.

Für den Wirkungsgrad der Gasturbine von entscheidender ist die Größe der Verlustströme. Vorteilhafterweise bleiben diese Verlustströme auch bei einer skalierten Gasturbine unverändert, so dass durch die größere Dimensionierung keine Einbußen des Wirkungsgrades aufgrund gesteigerter Verlustströme zu verzeichnen sind.

Der Startvorgang der skalierten Gasturbine benötigt zwar einen längeren Zeitraum, die dabei auftretenden transienten Spannungen innerhalb der Gasturbine bleiben allerdings unverändert, so dass es zu keiner vergrößerten Beanspruchung der Bauteile durch den Startvorgang kommt.

Vorteilhafterweise wird eine Kraftwerksanlage mit Gasturbine und vierpoligem Turbogenerator für Kugelhaufenreaktoren oder IGCC-Kraftwerke (Integrated Gasification Combined Cycles) verwendet. Bei dieser Anwendung kann im Verhältnis zu vier parallel arbeitenden zweipoligen Generatoren bei geringerem oder gleichem Platzbedarf und geringeren Kosten die gleiche Leistung erzielt werden.

### Kurze Beschreibung der Zeichnungen

Im Folgenden wird die Erfindung anhand eines Ausführungsbeispiels und mit Bezug auf die beiliegenden Zeichnungen näher erläutert.
Fig. 1 zeigt eine schematische Darstellung der erfindungsgemäßen Anordnung einer Gasturbine mit einer Kupplung an einen vierpoligen Generator;
Fig.2 zeigt eine schematische Darstellung bisheriger Anordnungen von Gasturbinen und zweipoligen Generatoren.

### Wege zur Ausführung der Erfindung

In Figur 1 ist schematisch eine erfindungsgemäße Ausführungsform einer Gasturbine 8, eines vierpoligen Turbogenerators 9 und einer direkten mechanischen Kupplung 12 abgebildet. Die Gasturbine 8 und der Generator 9 sind sich gegenüberliegend angeordnet, verbunden durch Wellen 10, 11 und eine Kupplung 12 dieser Wellen 10, 11. Die erste Welle, die Turbinenwelle 10, wird von der Gasturbine 8 angetrieben und nimmt das von der Turbine 8 erzeugte Drehmoment auf. Die zweite Welle, die Generatorwelle 11, entspricht einer Antriebswelle für den Turbogenerator 9, die das von der Turbine 8 erzeugte Drehmoment auf den Generator 9 überträgt und diesen somit antreibt. Auf der einen Seite ist diese Welle 11 mit dem Turbogenerator 9, auf der anderen Seite über eine Kupplung 12 mit der von der Turbine angetriebenen Welle 10 verbunden. Das gesamte von der Gasturbine 8 erzeugte Drehmoment wird über die Wellenkombination 10, 11 und die Kupplung 12 übertragen. Die erfindungsgemäße Gasturbine 8 erzeugt ein etwa vier Mal so hohe Leistung (MW) wie bisher für zweipolige Generatoren 1 verwendete Gasturbinen. Sowohl Turbinenwelle 10 als auch Generatorwelle 11 verlaufen entlang derselben Achse 13, mittig entlang der Linie, die von den in Reihe angeordneten Aggregaten, Turbine 8 und Generator 9, aufgestellt wird.

Die dreidimensional skalierte Gasturbine 8 ist in mehrere Bereiche zu unterteilen. Auf der dem Generator 9 zugewandten Seite ist der Ansaugbereich 16 für Umgebungsluft, an den sich der Verdichter 15 und die Turbine 14 anschließen. Auf der dem Generator abgewandten Seite ist der Austrittsbereich 17 der Verbrennungsgase der Turbine 14. Auf diese Weise werden heiße Verbrennungsgase nicht in Richtung des Generators 9, sondern weg von der Anordnung abgeführt. Der Aufbau der dreidimensional skalierten Gasturbine 8 entspricht dem einer konventionellen Gasturbine 2, die mechanische Leistung in Form von Wellenleistung abgibt. Ein oder mehrere Verdichter 15 komprimieren atmosphärische Luft und fördern sie in eine oder mehrere Brennkammern. In die Brennkammer wird zusätzlich Brennstoff eingespritzt und das Gemisch zum Entzünden gebracht. Die entstehenden Verbrennungsgase strömen durch eine oder mehrere nachgeschaltete Turbinen 14 und werden dabei entspannt. Die Druck- und Wärmeenergie wird in mechanische Rotationsenergie umgewandelt und steht an der Turbinenwelle 10 zur Verfügung.

In einem gesonderten Ausführungsbeispiel werden die heißen Verbrennungsgase der Gasturbine 8 dazu verwendet, Dampf für eine an das System gekoppelte Dampfturbine herzustellen.

Der Turbogenerator 9 ist eine vierpolige Synchronmaschine und erzeugt die gleiche Strommenge, wie vier parallel betriebene, zweipolige Generatoren 1. Der Rotor ist ein schlanker, langgestreckter Vollpolmaschinenrotor, ein geschmiedeter Stahlzylinder mit zwei Polpaaren. Durch die Fliehkraft ist der Durchmesser des Rotors begrenzt. Die Erregerwicklung liegt in Nuten am Umfang des Zylinders verteilt, die durch Keile aus Bronze oder Aluminiumlegierung verschlossen sind. Die Wickelköpfe der Erregerwicklung werden durch Kappen gehalten. Die Erregerwicklung ist mit wasserstoff- oder wassergekühlten Hohlleitern gewickelt. Auf diese Weise wird die entstehende Verlustwärme in der Wicklung abgeführt. Die Drehzahl des Turbogenerators 9 liegt bei 1500 min⁻¹ bzw. bei 1800 min⁻¹, je nachdem, ob der erzeugte Strom einem mit 50 Hz oder mit 60 Hz betriebenen Stromnetz zugeführt wird.

Die Verwendung von nur einem vierpoligen 9 gegenüber vier zweipoligen 1 Turbogeneratoren entspricht einer platzsparenden Anordnung, da die eingenommene Fläche geringer oder gleich ausfällt.

Die Kupplung 12 der Turbinenwelle 10 und der Generatorwelle 11 ist eine mechanische Kupplung. Die beiden Wellenenden werden starr miteinander verbunden, so dass eventuelle Leistungsverluste an der Kupplung 12 vermieden werden können.

Zum Starten der Gasturbine 8 wird der Turbogenerator 9, der dabei als Motor dient und sich selbst und die Gasturbine 8 antreibt, verwendet. Während des Startvorgangs wird mittels Fremdzündung das Brennstoff-Luft-Gemisch in der Brennkammer der Gasturbine 8 gezündet, bis die Zündung in der Brennkammer selbständig abläuft und das von der Gasturbine 8 abgegebene Drehmoment ausreicht, den Turbogenerator 9 zu beschleunigen. Ab diesem Zeitpunkt ist keine unterstützende Antriebskraft durch den Generator 9 mehr notwendig, so dass eine Antriebsumkehr stattfindet und ausschließlich die Gasturbine 8 den Turbogenerator 9 antreibt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichen liste

- 1: zweipoliger Turbogenerator
- 2: konventionelle Gasturbine
- 3: Längsachse
- 4: Antriebswelle an der Gasturbine
- 5: Antriebswelle für den Turbogenerator
- 6: Mechanische Kupplung
- 7: Kraftwerksanlage
- 8: Skalierte Gasturbine
- 9: Vierpoliger Turbogenerator
- 10: Turbinenwelle
- 11: Generatorwelle
- 12: Mechanische Kupplung
- 13: Längsachse
- 14: Turbine
- 15: Verdichter
- 16: Ansaugbereich
- 17: Austrittsbereich

## Patentansprüche

1. Gasturbine (8) mit Turbogenerator (9), insbesondere für eine Kraftwerksanlage, **dadurch gekennzeichnet, dass** der Turbogenerator (9) als vierpoliger Synchrongenerator ausgebildet ist, dass die Gasturbine (8) ihren Auslegungspunkt bei einer Drehzahl von 1500 min⁻¹ oder 1800 min⁻¹ aufweist und dass zwischen der Gasturbine (8) und dem Generator (9) eine direkte mechanische Kupplung (12) vorgesehen ist.

2. Gasturbine (8) mit Turbogenerator (9) nach Anspruch 1, **dadurch gekennzeichnet, dass** die Gasturbine (8) im Bezug auf konventionelle Gasturbinen dreidimensional mit dem Faktor 2 skaliert ist.

3. Gasturbine (8) mit Turbogenerator (9) nach einem der vorhergehenden Ansprüche, **dadurch gekennzeichnet, dass** bei der Gasturbine (8) die Machzahl und die Geschwindigkeitsdreiecke in den Kanälen der Gasturbine (8) unverändert bleiben.

4. Gasturbine (8) mit Turbogenerator (9) nach einem der vorhergehenden Ansprüche, **dadurch gekennzeichnet, dass** die Gasturbine (8) gegenüber konventionellen Gasturbinen eine um den Faktor 2 höhere Reynoldszahl und Nusseltzahl aufweist.

5. Gasturbine (8) mit Turbogenerator (9) nach einem der vorhergehenden Ansprüche, **dadurch gekennzeichnet, dass** bei der Gasturbine (8) die Drücke und Temperaturen an den entsprechenden Positionen der Laufschaufelkanäle der Gasturbine (8) und die Spannungen der Gasturbine (8) an allen entsprechenden Positionen gegenüber konventionellen Gasturbinen unverändert sind.

6. Gasturbine (8) mit Turbogenerator (9) nach einem der vorhergehenden Ansprüche, **dadurch gekennzeichnet, dass** bei der Gasturbine (8) das Verhältnis zwischen kritischer Geschwindigkeit und Betriebsgeschwindigkeit und der Anteil der Verlustströme gegenüber konventionellen Gasturbinen unverändert ist.

7. Gasturbine (8) mit Turbogenerator (9) nach einem der vorhergehenden Ansprüche, **dadurch gekennzeichnet, dass** bei der Gasturbine (8) die Startzeit um den Faktor 2 ansteigt und dass die transienten Spannungen beim Startvorgang gegenüber konventionellen Gasturbinen unverändert sind.

8. Gasturbine (8) mit Turbogenerator (9) nach einem der vorhergehenden Ansprüche, **dadurch gekennzeichnet, dass** die Gasturbine (8) eine um den Faktor 4 gesteigerte Leistung und einen um den Faktor 4 gesteigerten Massenfluss gegenüber konventionellen Gasturbinen aufweist.

9. Verwendung einer Gasturbine (8) mit Turbogenerator (9) nach einem der vorhergehenden Ansprüche, für Kraftwerke mit Kugelhaufenreaktor oder für IGCC-Kraftwerke oder große Naturgaskraftwerke.
